# EUROPÄISCHE PATENTSCHRIFT

(11) **EP 1 000 844 B1**
(45) Veröffentlichungstag und Bekanntmachung des Hinweises auf die Patenterteilung: **25.02.2004**
(21) Anmeldenummer: 99122193.8
(22) Anmeldetag: 06.11.1999
(51) Int. Cl.: B62J 11/00

(54) **Schirmhalterung für ein Zweirad od. dgl.**
Umbrella holding device for bicycle
Support de parapluie pour bicyclette

(30) Priorität: 11.11.1998 DE 29820158 U; 25.11.1998 DE 29821094 U; 29.12.1998 DE 29823169 U; 15.01.1999 DE 29900541 U
(43) Veröffentlichungstag der Anmeldung: 17.05.2000
(73) Patentinhaber: Klaus, Egon, 48231 Warendorf (DE)
(72) Erfinder: Klaus, Egon, 48231 Warendorf (DE)
(74) Vertreter: Habbel, Hans-Georg, Dipl.-Ing.

(56) Entgegenhaltungen:
- DE-A- 3 620 513
- DE-U- 29 803 870
- GB-A- 2 010 200

## Beschreibung

Die Erfindung bezieht sich auf eine Schirm mit Schirmhalterung für ein gegen Witterungseinflüsse ungeschütztes Fahrzeug wie ein Zweirad od. dgl. gemäß dem Oberbegriff des Hauptanspruches und dem Oberbegriff des Anspruches 2.

Aus der DE 36 20 513 A1 ist eine gattungsbildende Schirmhalterung bekanntgeworden, bei welcher ein üblicher Regenschirm an seinem Griff an dem Fahrzeug befestigbar und einstellbar ist. Hierbei wird der Schirm bei voller Länge des Schirmrohres aufgespannt und kann auch nach vorne verstellt werden, wobei aber als nachteilig empfunden wird, daß dabei die Beine des Zweiradbenutzers überhaupt nicht geschützt sind.

Durch die relativ weite Entfernung der Schirmbespannung von der Schirmhalterung und damit auch von der das Zweirad benutzenden Person wird neben der Tatsache, daß ein ungenügender Schutz gegen Regen oder Schnee bedingt wird, außerdem zwangsläufig bedingt, daß der Schirm eine relativ große Angriffsfläche relativ weit entfernt von seinem Befestigungspunkt dem Wind od. dgl. darbietet, so daß dadurch die Stabilität des Zweirades erheblich beeinträchtigt wird und die sichere Halterung des Schirmes beeinträchtigt wird.

Auch die Anbringung des Schirmes an seiner Schirmhalterung am Zweirad ist nur aufwendig zu betätigen.

Aus der DE 89 14 316 U1 ist ein Regenschirmhalter für Tourenfahrräder bekannt geworden, bei dem der eigentliche Halter am Schirmrohr angreift. Neben den Nachteilen, wie sie vorstehend zur DE 36 20 513 A1 erläutert sind, hat diese Anordnung den Nachteil, daß die Halterung am Schirmrohr nicht die aussreichende Stabilität schafft, sondern der Schirm kann bei entsprechender Windbelastung abknicken.

Der Erfindung liegt die Aufgabe zugrunde, eine Schirm mit Schirmhalterung zu schaffen, die in Verbindung mit einem angepaßten Schirm ein schnelles Anschließen des Schirmes am Zweirad ermöglicht, wobei der Anschluß auch von technisch Unbegabten und Kindern durchgeführt werden soll und wobei weiterhin der Schirm, trotzdem es sich hinsichtlich des Schirmrohres und der Bespannung um einen handelsüblichen Schirm handelt, nahe vor den Knien der das Zweirad benutzenden Person aufgespannt werden kann.

Diese der Erfindung zugrundeliegende Aufgabe wird durch die Lehre des Hauptanspruches gelöst.

Vorteilhafte Ausgestaltungen der Erfindung sind in den Unteransprüchen erläutert.

Mit anderen Worten ausgedrückt wird vorgeschlagen, daß der Schirmgriff als Schließkolben ausgebildet ist und am Zweirad, vorzugsweise am Lenkerträger oder am Steuerrohr oder sogar am Lenker eine Haltevorrichtung fest angeordnet ist, in die der Schließkolben in einfachster Weise eingesetzt werden kann, wobei diese Haltevorrichtung mit einem gegen die Wirkung mindestens einer Rückstellfeder zurückschiebbaren Riegel ausgerüstet ist, der in eine entsprechende Riegelnut des Schließkolbens eingreift.

Der eigentliche Griff des Schirmes weist dabei eine Aufnahmeöffnung auf, in die eine Hakennase der Haltevorrichtung eingesetzt werden kann, wobei die Hakennase mit einem nach oben ausgerüsteten Haken am Hakensteg versehen ist, so daß dadurch eine Sicherung des Griffes des Schirmes nach vorne hin erreicht wird, da der Schließkolben durch die Hakennase nach vorne hin festgelegt wird. Zur Rückseite hin liegt der Schließkolben an der eigentlichen Haltevorrichtung an, die an dem Zweirad befestigt ist und die Absicherung des Schließkolbens und damit des Griffes des Schirmes nach oben hin erfolgt durch einen Riegel, der mit seiner Riegelnase in eine Riegelnut am Schließkolben eingreift.

Der Riegel ist leicht zurückzuschieben und - da die Riegelnase abgeschrägt ausgebildet ist - wird sie beim Einsetzen des Schließkolbens automatisch nach hinten bewegt, d. h. also das Einsetzen des Griffes des Schirmes kann ohne Handbetätigung des Riegels allein durch Einschieben des Schließkolbens erreicht werden.

Eine abgeänderte Ausführungsform wird in dem unabhängigen Anspruch 2 und den Unteransprüchen definiert.

Gemäß dieser abgewandelten Ausführungsform wird vorgeschlagen, daß vor dem Lenkerträger, Lenker oder dem Steuerrohr ein Träger angeordnet wird, in den der Schirm einsetzbar ist, wobei dieser Träger vorzugsweise mit einer topfförmigen Aufnahme ausgerüstet ist, die den eigentlichen Griff des Schirmes aufnimmt und weiterhin eine Klemmvorrichtung aufweist, die relativ nahe an der Schiebemuffe des Schirmes angreift, so daß also das Schirmrohr an zwei Stellen festgelegt wird, einmal unten am Griff und einmal relativ weit vorne, wobei aber das Schirmrohr wie üblich teleskopartig ausgebildet ineinandergeschoben wird, so daß sich der Schirm im aufgespannten Zustand möglichst nahe vor dem Lenker und damit vor den Knien des das Fahrzeug Benutzenden befindet.

Hierbei kann so vorgegangen werden, daß der Träger unter Zwischenschaltung einer Gelenkverbindung über eine Arretiervorrichtung und Haltevorrichtung am Lenkerrohr, Lenker oder Steuerrohr festgelegt wird, die leicht lösbar ist oder aber der Träger wird am Steuerrohr oder Lenkerrohr festgelegt und kann am Fahrzeug verbleiben.

Es erscheint sehr vorteilhaft, daß die Klemmvorrichtung mit einem Exzenterverschluß ausgerüstet ist und daß zusätzlich am Träger Haltevorrichtungen, beispielsweise Bänder oder Clipsvorrichtungen vorgesehen sind, die den Schirm aufnehmen, wenn dieser bei Nichtgebrauch zusammengeschoben ist, so daß der Schirm am Fahrzeug stets griffbereit untergebracht. ist.

Bei Nichtgebrauch des Trägers kann dieser vorteilhafterweise zusammengeklappt oder teleskopierend ineinandergeschoben werden, so daß der durch den Träger gebildete Vorsprung verringert wird.

Bei der erfindungsgemäßen Anordnung kann es vorteilhaft sein, die eigentliche Schirmbespannung zusätzlich in Signalfarben auszubilden, wodurch insbesondere bei Schülern und in der Abenddämmerung und nachts eine bessere Sicht des Zweiradfahrers erreicht wird.

Ausführungsbeispiele der Erfindung werden nachfolgend anhand der Zeichnungen erläutert. Die Zeichnungen zeigen dabei in
- Fig. 1: die erfindungsgemäße Anordnung eines Schirmes an einem Zweirad, in
- Fig. 2: in größerem Maßstab und in einer Schnittdarstellung die Anordnung der Haltevorrichtung an einem Lenkerträger, in
- Fig. 3: eine Ansicht auf die Anordnung in Fig. 2 von vorne gesehen, in
- Fig. 4: eine Schnittdarstellung durch den Riegel mit den zugeordneten Rückstellfedern, in
- Fig. 5: eine Ansicht von unten auf die Anordnung gemäß Fig. 4 und in
- Fig. 6: einen am Lenkerträger angeordneten Träger.

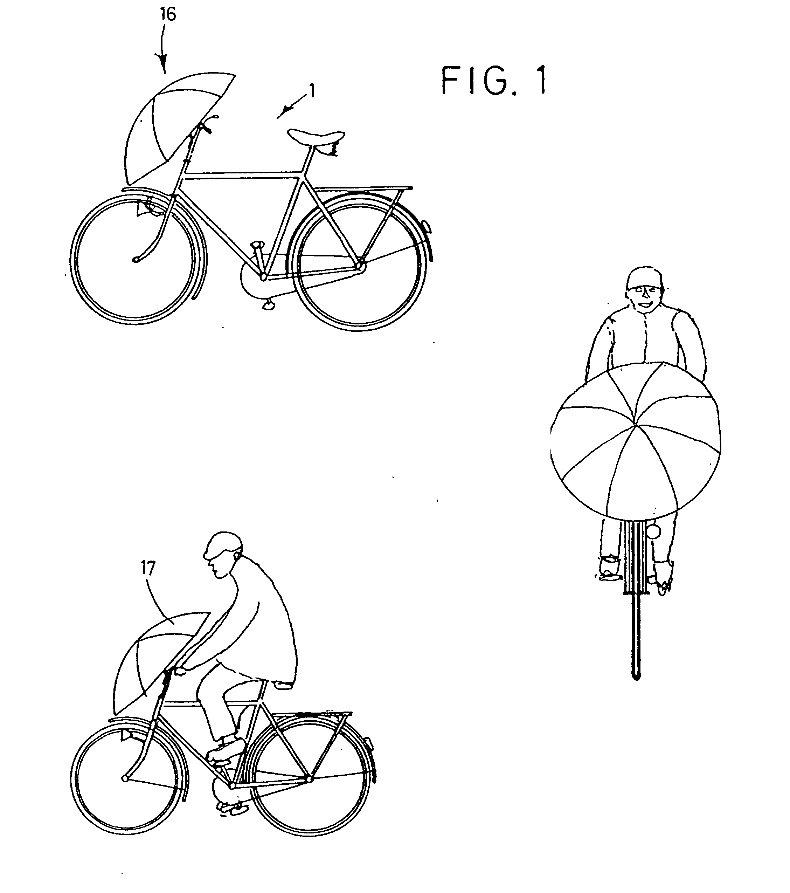

In Fig. 1 ist ein Zweirad dargestellt, das im nachfolgenden als Fahrzeug 1 bezeichnet wird. Hierbei kann es sich um ein Fahrrad, ein Moped oder auch um ein mit drei Rädern ausgerüstetes Fahrrad od. dgl. handeln. An der Vorderseite dieses Fahrzeuges 1 ist ein Schirm 16 angeordnet, der in Fig. 1 mit aufgespannter Schirmbespannung 17 dargestellt ist.

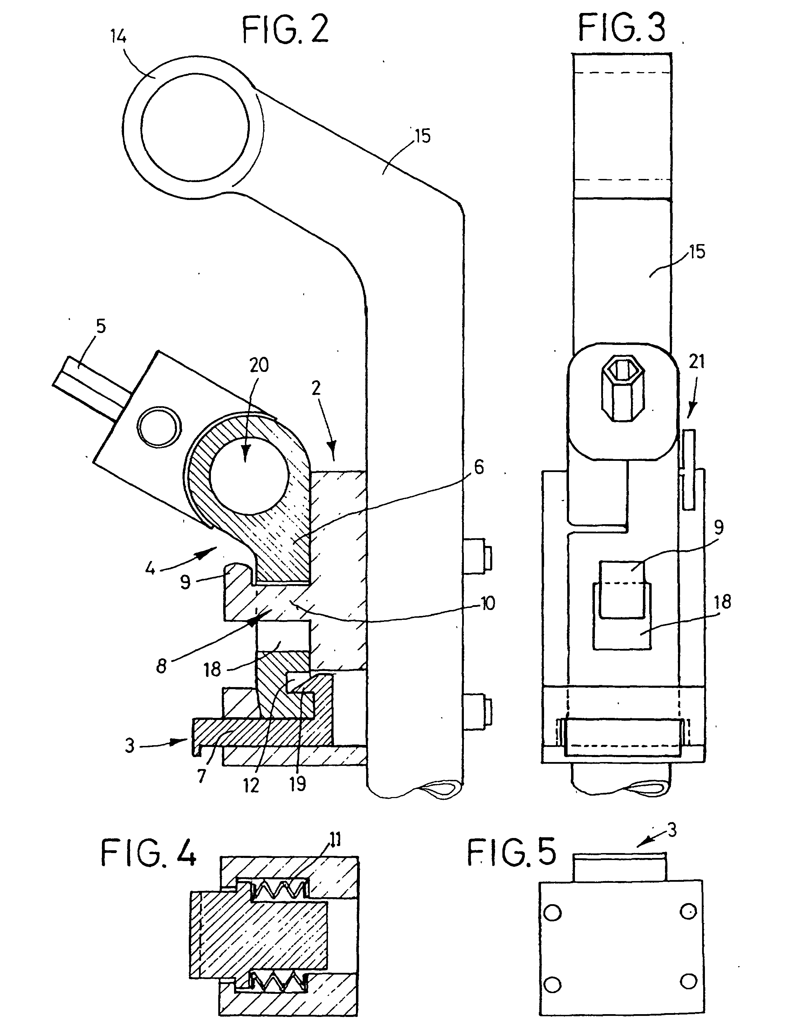

In wesentlich größerem Maßstab ist in den Fig. 2 bis 5 eine Haltevorrichtung 2 für den Schirm 16 dargestellt, wobei die Haltevorrichtung 2 eine Arretiervorrichtung 3 für einen Griff 4 des Schirmes 16 aufweist. Der Griff 4 des Schirmes 16 ist als Schließkolben 6 ausgebildet, der bei Benutzung des Schirmes als normaler Handschirm als normaler Schirmgriff dient, der eine Aufnahmeöffnung 18 aufweist und mit einer Riegelnut 12 ausgerüstet ist. An den Griff 4 des Schirmes schließt ein Schirmrohr 5 an, das in an sich bekannter Weise ausgebildet ist und beispielsweise als Schirmrohr 5 eines Taschenschirmes gestaltet ist, d. h. ein solches Schirmrohr kann z. B. auf seine halbe Länge teleskopartig zusammengeschoben und in dieser Stellung arretiert werden, wobei trotzdem die Schirmbespannung 17 aufgespannt ist. Hierdurch wird erreicht, daß - wie besonders deutlich aus Fig. 1 ersichtlich ist - der Schirm 16 mit seiner aufgespannten Beschirmung 17 relativ nahe an der Haltevorrichtung 2 angeordnet ist.

Die Haltevorrichtung 2 ist bei dem dargestellten Ausführungsbeispiel gemäß Fig. 2 an einem Lenkerträger 15 für einen nur schematisch angedeuteten Lenker 14 angeordnet und diese Haltevorrichtung 2 weist eine nach vorne gerichtete Hakennase 8 auf, die einen Hakensteg 10 und einen nach oben gerichteten Haken 9 besitzt. Diese Hakennase 8 kann durch die Aufnahmeöffnung 18 des Schließkolbens 6 eingesetzt werden und greift dann mit dem eigentlichen Haken 9 an der Außenseite des Schließkolbens 6 an der Vorderseite desselben an, so daß bei eingesetztem Schließkolben 6 eine Entfernung des Schließkolbens 6 nach vorne hin nicht möglich ist.

In die Riegelnut 12 greift eine Riegelnase 19, die an einem Riegel 7 angeordnet ist, wobei der Riegel 7 durch Rückstellfedern 11 (Fig. 4) in seine in Fig. 2 dargestellte Stellung geführt wird, in der die Riegelnase 19 in die Riegelnut 12 eingreift und damit den Schließkolben 6 gegen Bewegungen nach oben hin festlegt.

Hierbei ist die Riegelnase 19 von hinten oben nach vorne unten abgeschrägt, so daß bei Einsetzen des Schließkolbens 6 die Unterkante des Schließkolbens den Riegel 7 gegen die Wirkung der Rückstellfeder 11 zurückbewegt und dann - sobald die Riegelnase 19 in dem Bereich der Riegelnut 12 gelangt - wieder nach vorne bewegt wird und dadurch den Schließkolben 6 festlegt. Hierdurch ist ein Einsetzen und Verriegeln des Griffes 4 des Schirmes 16 in einfachster Weise möglich.

Die eigentliche Schirmbespannung 17 kann in Signalfarben ausgebildet sein, so daß gerade bei schlechtem Wetter und aufgespanntem Schirm 16 eine zusätzliche Sicherheit für den Benutzer des Fahrzeuges 1 erreicht wird.

Anstelle an dem Lenkerträger 15 kann die eigentliche Haltevorrichtung 2 auch am Steuerrohr des Fahrzeuges 1 oder an dessen Lenker 14 angeordnet werden.

In Fig. 2 ist bei 20 ein Gelenk erkennbar, das die Möglichkeit gibt, daß der eigentliche Schirm 16 in verschiedenen Neigungen vor dem Benutzer des Fahrzeuges angeordnet werden kann. Natürlich kann der Griff 4 des Schirmes und damit der Schließkolben 6 gegenüber dem mit dem Schirmrohr 5 verbundenen Schirm im Bereich des Gelenkes 20 arretiert werden, so daß die einzelnen, eingestellten Stellungen fest und gesichert sind. Eine solche Arretierung ist in Fig. 3 durch das angedeutete Stellrad 21 verdeutlicht.

Der Schließkolben 6 bildet zusammen mit der Haltevorrichtung 2 einen Ratschenverschluß, der schnell verrastbar und schnell lösbar ist, wobei in den Fig. 2 bis 5 nur ein Ausführungsbeispiel eines solchen Ratschenverschlusses dargestellt ist.

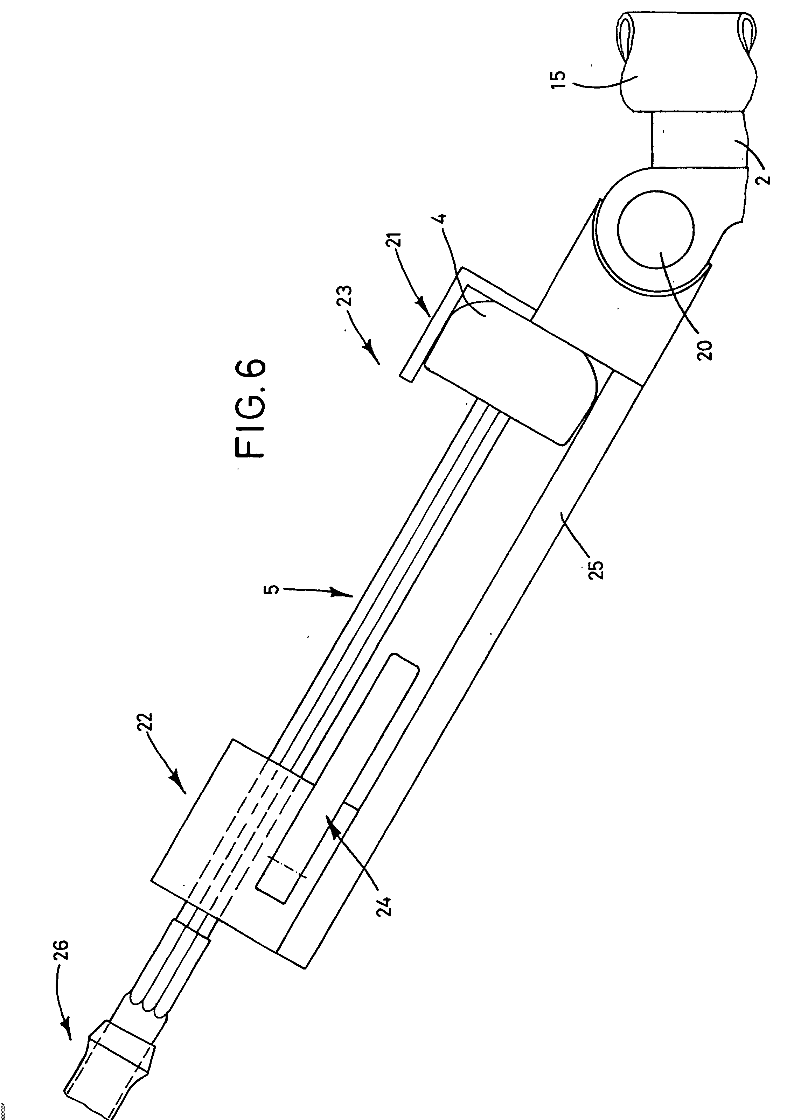

In wesentlich größerem Maßstab ist in Fig. 6 ein Träger 23 dargestellt, der unter Zwischenschaltung einer Haltevorrichtung 2 an einen Lenkerträger 15 anschließt. Zwischen dem Träger 23 und der Haltevorrichtung 2 ist ein arretierbares Gelenk 20 eingeschaltet.

Der Träger 23 weist eine Aufnahme 21 auf, die dem Griff eines Schirmes angepaßt ist und diesen Griff aufnimmt. Weiterhin besteht der Träger 23 aus einem langgestreckten Tragelement 25, das an seinem vorderen Ende eine Klemmvorrichtung 22 trägt, in der das Schirmrohr 5 beispielsweise mittels eines Exzenterverschlusses 24 festgelegt werden kann. Dieses Tragelement 25 kann bei Nichtgebrauch in irgendeiner Weise in seiner Länge verringert werden und kann auch in seiner wirksamen Länge einstellbar sein, z. B. dadurch, daß es teleskopartig verschiebbar ist. Bei 26 ist eine Schiebemuffe angedeutet, an der die Speichen des Schirmes anschließen und die auf dem obersten Schirmrohr verschiebbar ist, wobei bei dem dargestellten Ausführungsbeispiel die einzelnen, das Schirmrohr 5 bildenden Teleskoprohre so weit ineinandergeschoben sind, daß das oberste Schirmrohr 5 und damit auch dann der aufgespannte Schirm möglichst nahe vor dem Lenkerträger angeordnet ist. Auf diese Weise ist es möglich, in einfachster weise den Schirm möglichst nahe vor den Knien des Fahrzeugbenutzers zu halten, wobei durch die doppelte Abstützung einerseits in der Aufnahme 21, andererseits in der Klemmvorrichtung 22, der Schirm sicher und fest gehaltert ist, so daß auch Querwinde den Schirm nicht aus ihrer Halterung heraus bewegen können.

Die Haltevorrichtung 2 kann am Lenkerträger 15 anschließen und am Träger 23 kann ein Schließkolben 6 angeordnet sein, der eine Aufnahmeöffnung 18 aufweist und mit einer Riegelnut 12 ausgerüstet ist, so wie in Fig. 2 bis 5 dargestellt.

Anstelle an dem Lenkerträger 15 kann die eigentliche Haltevorrichtung 2 auch am Steuerrohr des Fahrzeuges 1 oder an dessen Lenker 14 angeordnet werden.

## Patentansprüche

1. Schirm mit Schirmhalterung für ein gegen Witterungseinflüsse ungeschütztes Fahrzeug wie ein Zweirad od. dgl. mit einer an dem Fahrzeug (1) befestigbaren Haltevorrichtung (2) mit einer Arretiervorrichtung (3) zur Arretierung des Griffes des Schirmes (16), **dadurch gekennzeichnet, daß**
a) der Schirmgriff (4) gelenkig an das Schirmrohr (5) anschließt und als Schließkloben (6) ausgebildet ist,
b) das Schirmrohr (5) als bei Taschenschirmen übliches Teleskoprohr ausgebildet ist, das in seiner etwa halben Längserstreckung bei aufgespannter Schirmbespannung (17) arretierbar ist und
c) der Schirmgriff eine Aufnahmeoffung (18) aufweist, in die eine Hakennase (8) der Haltevorrichtung (2) eingesetzt ist,
d) die Arretiervorrichtung (3) der Haltevorrichtung (2) als Riegel (7) ausgebildet ist, der in eine Riegelnut (12) des Schließkolbens (6) eingreift.

2. Schirm mit Schirmhalterung für ein gegen Witterungseinflüsse ungeschütztes Fahrzeug wie ein Zweirad o. dgl. mit einer an dem Fahrzeug (1 ) befestigbaren Haltevorrichtung (2) zur Halterung des Schirmes (16), **dadurch gekennzeichnet daß** das Schirmrohr (5) als bei Taschenschirmen übliches Teleskoprohr ausgebildet ist, das in seiner etwa halben Längserstreckung bei aufgespannter Schirmbespannung (17) arretierbar ist, die Haltevorrichtung (2) an den Lenkerträger (15), das Steuerrohr oder den Lenker des Fahrzeuges (1) anschließbar ist, ein Träger (23) für den Schirm (16) vorgesehen ist mit einer Aufnahme (21) für den Griff (4) des Schirmes (16) und einer Klemmvorrichtung (22) für das Schirmrohr (5), wobei der Träger (23) unter Zwischenschaltung eines arretierbaren Gelenkes (20), zwischen dem Trager (23) und der Haltevorrichtung, an das Fahrzeug (1) anschließbar ist.

3. Schirm mit Schirmhalterung nach Anspruch 2, **gekennzeichnet durch** eine Arretiervorrichtung (3) der Haltevorrichtung (2), die als Riegel (7) ausgebildet ist, der in einer Riegelnut (12) eines von dem Träger (23) getragenen Schließkolbens (6) eingreift.

4. Schirm mit Schirmhalterung nach Anspruch 1, 2 oder 3, **dadurch gekennzeichnet, daß** die Haltevorrichtung (2) eine vorspringende Hakennase (8) aufweist und der Schließkloben (6) eine der Hakennase (8) angepaßte Aufnahmeöffnung (18) besitzt.

5. Schirm mit Schirmhalterung nach einem der vorhergehenden Ansprüche, **dadurch gekennzeichnet, daß** der Riegel (7) gegen die Wirkung mindestens einer Rückstellfeder (11) aus der Aufnahmenut (12) des Schließkolbens (6) zurückstellbar ist.

6. Schirm mit Schirmhalterung nach einem der vorhergehenden Ansprüche, **dadurch gekennzeichnet, daß** der Riegel (7) - vom Lenkerträger (15) aus gesehen - von vorne betätigbar ist.

7. Schirm mit Schirmhalterung nach einem der vorhergehenden Ansprüche, **dadurch gekennzeichnet, daß** die am Riegel (7) angeordnete Riegelnase (19) von oben nach unten und von hinten nach vorne abgeschrägt ausgebildet ist.

8. Schirm mit Schirmhalterung nach Anspruch 3, **dadurch gekennzeichnet**net, daß das Schirmrohr (5) und damit der Schirm (16) gelenkig (bei 20) an den Schließkolben (6) anschließt

9. Schirm mit Schirmhalterung nach einem der vorhergehenden Ansprüche, **dadurch gekennzeichnet, daß** die Schirmbespannung (17) in Signalfarben ausgestaltet ist.

10. Schirm mit Schirmhalterung nach Anspruch 2, **dadurch gekennzeichnet, daß** die Klemmvorrichtung (22) mit einem Exzenterverschluß (24) ausgerüstet ist.

11. Schirm mit Schirmhalterung nach Anspruch 2 oder 10, **dadurch gekennzeichnet, daß** der Träger (23) zusätzlich mit Haltevörrichtungen für den Schirm (16) bei Nichtgebrauch desselben ausgerüstet ist.

12. Schirm mit Schirmhalterung nach einem der vorhergehenden Ansprüche, **dadurch gekennzeichnet, daß** der Träger (23) bei Nichtgebrauch zusammenklappbar oder ineinanderschiebbar ist.

13. Schirm mit Schirmhalterung nach einem der vorhergehenden Ansprüche, **dadurch gekennzeichnet, daß** der Träger (23) in sei-. ner Gebrauchsstellung in seiner wirksamen Länge einstellbar ist.

## Claims

1. An umbrella with an umbrella mounting, for a vehicle which is unprotected from the effects of weather, such as a bicycle or the like, comprising a holding device (2) which can be fastened to the vehicle (1) and which comprises a locking device (3) for locking the handle of the umbrella (16), **characterised in that**
a) the umbrella handle (4) is attached hinged to the umbrella tube (5) and is formed as a closing plunger (6),
b) the umbrella tube (5) is formed as a telescopic tube which is customary for collapsible umbrellas, and can be locked at approximately half its longitudinal extent with the umbrella covering (17) opened, and
c) the umbrella handle comprises a receiver opening (18) in which a hooked projection (8) of the holding device (2) is inserted,
d) the locking device (3) of the holding device (2) is formed as a bolt (7) which fits into a locking notch (12) of the closing plunger (6).

2. An umbrella with an umbrella mounting, for a vehicle which is unprotected from the effects of weather, such as a bicycle or the like, comprising a holding device (2) which can be fastened to the vehicle (1) for holding the umbrella (16), **characterised in that** the umbrella tube (5) is formed as a telescopic tube which is customary for collapsible umbrellas, and can be locked at approximately half its longitudinal extent with the umbrella covering (17) opened, the holding device (2) can be attached to the handlebar support (15), to the fork column or to the handlebars of the vehicle (1), a support (23) is provided for the umbrella (16), with a receiver (21) for the handle (4) of the umbrella (16) and a clamping device (22) for the umbrella tube (5), wherein the support (23) can be attached to the vehicle (1) with the interposition of a lockable joint (20) between the support (23) and the holding device.

3. An umbrella with an umbrella mounting according to claim 2, **characterised by** a locking device (3) of the holding device (2), which is formed as a bolt (7) and which fits into a locking notch (12) of a closing plunger (6) which is borne by the support (23).

4. An umbrella with an umbrella mounting according to claim 1, 2 or 3, **characterised in that** the holding device (2) comprises a protruding hooked projection (8), and the closing plunger (6) has a receiver opening (18) which is matched to the hooked projection (8).

5. An umbrella with an umbrella mounting according to any one of the preceding claims, **characterised in that** the bolt (7) can be moved back out of the receiving notch (12) in the closing plunger (6 ) against the action of at least one restoring spring (11).

6. An umbrella with an umbrella mounting according to any one of the preceding claims, **characterised in that** - as seen from the handlebar support (15) - the bolt (7) can be operated from the front.

7. An umbrella with an umbrella mounting according to any one of the preceding claims, **characterised in that** the locking projection (19) disposed on the bolt (7) is of chamfered construction from top to bottom and from back to front.

8. An umbrella with an umbrella mounting according to claim 3, **characterised in that** the umbrella tube (5), and with it the umbrella (16), is attached hinged (at 20) to the closing plunger (6).

9. An umbrella with an umbrella mounting according to any one of the preceding claims, **characterised in that** the umbrella covering (17) is fashioned in signal colours.

10. An umbrella with an umbrella mounting according to claim 2, **characterised in that** the clamping device (22) is equipped with an eccentric lock (24).

11. An umbrella with an umbrella mounting according to claim 2 or 10, **characterised in that** the support (23) is additionally equipped with holding devices for the umbrella (16) when the latter is not in use.

12. An umbrella with an umbrella mounting according to any one of the preceding claims, **characterised in that** when it is not in use the support (23) can be folded up or telescoped.

13. An umbrella with an umbrella mounting according to any one of the preceding claims, **characterised in that** the effective length of the support (23) can be adjusted in its position of use.

## Revendications

1. Parapluie avec support de parapluie pour un véhicule non protégé des intempéries tel qu'un deux-roues ou similaire, avec un mécanisme de fixation (2) pouvant être fixé sur le véhicule (1) avec un mécanisme de blocage (3) destiné à bloquer la poignée du parapluie (16), **caractérisé en ce que** :
a) la poignée (4) du parapluie est articulée sur le manche (5) du parapluie et est conformée comme un étau (6),
b) le manche (5) du parapluie est conformé comme un manche télescopique ordinaire de parapluie de poche qui peut être bloqué à la moitié environ de son étendue avec la toile du parapluie (17) tendue,
c) la poignée du parapluie présente une ouverture de logement (18) qui reçoit un bec de crochet (8) du mécanisme de fixation (2), et
d) le mécanisme de blocage(3)du mécanisme de fixation (2) est conformé comme une targette (7) qui se met en prise dans une gorge (12) de l'étau (6).

2. Parapluie avec support de parapluie pour un véhicule non protégé des intempéries tel qu'un deux-roues ou similaire, avec un mécanisme de fixation (2) pouvant être fixé sur le véhicule (1) pour fixer le parapluie (16), **caractérisé en ce que** le manche (5) du parapluie est conformé comme un manche télescopique ordinaire de parapluie de poche qui peut être bloqué à la moitié environ de son étendue avec la toile du parapluie (17) tendue, le mécanisme de fixation (2) peut être relié au support du guidon (15), au tube de direction ou au guidon du véhicule (15), il est prévu un support (23) pour le parapluie (16) avec un logement (21) pour la poignée (4) du parapluie (16) et un mécanisme de serrage (22) pour le manche du parapluie (5), le support (23) pouvant être raccordé sur le véhicule entre le support (23) et le mécanisme de fixation en intercalant une articulation (20) qui peut être bloquée.

3. Parapluie avec support de parapluie selon la revendication 2, **caractérisé en ce qu'**il comporte un mécanisme de blocage(3) du mécanisme de fixation (2) qui est conformé comme une targette (7) qui se met en prise dans une gorge (12) d'un étau (6) porté par le support (23).

4. Parapluie avec support de parapluie selon la revendication 1, 2 ou 3, **caractérisé en ce que** le mécanisme de fixation (2) présente un bec de crochet (8) en saillie et l'étau (6) possède une ouverture de logement (18) adaptée au bec de crochet (8).

5. Parapluie avec support de parapluie selon l'une des revendications précédentes, **caractérisé en ce que** la targette (7) peut être rappelée hors de la gorge de réception (12) de l'étau (6) contre l'action d'au moins un ressort de rappel (11).

6. Parapluie avec support de parapluie selon l'une des revendications précédentes, **caractérisé en ce que** la targette (7) peut être actionnée de l'avant, en vue depuis le support de guidon (15).

7. Parapluie avec support de parapluie selon l'une des revendications précédentes, **caractérisé en ce que** le bec de targette (19) disposé sur la targette (7) est biseauté de haut en bas de d'arrière en avant.

8. Parapluie avec support de parapluie selon la revendication 3, **caractérisé en ce que** le manche du parapluie (5) et, de ce fait, le parapluie (16) sont reliés de façon articulée (en 20) sur l'étau (6).

9. Parapluie avec support de parapluie selon l'une des revendications précédentes, **caractérisé en ce que** la toile du parapluie (17) est pourvue de couleurs de signalisation.

10. Parapluie avec support de parapluie selon la revendication 2, **caractérisé en ce que** le mécanisme de serrage (22) est pourvu d'une fermeture à excentrique (24).

11. Parapluie avec support de parapluie selon la revendication 2 ou 10, **caractérisé en ce que** le support (23) est équipé en outre de mécanismes pour fixer le parapluie (16) lorsque celui-ci n'est pas utilisé.

12. Parapluie avec support de parapluie selon l'une des revendications précédentes, **caractérisé en ce que** le support (23) peut être replié ou rétracté lorsqu'il n'est pas utilisé.

13. Parapluie avec support de parapluie selon l'une des revendications précédentes, **caractérisé en ce que** la longueur utile du support (23) dans sa position d'utilisation est réglable.
